# EUROPÄISCHE PATENTSCHRIFT

(11) **EP 0 760 762 B1**
(45) Veröffentlichungstag und Bekanntmachung des Hinweises auf die Patenterteilung: **15.12.1999**
(21) Anmeldenummer: 94923641.8
(22) Anmeldetag: 27.07.1994
(51) Int. Cl.: B60T 8/00

(54) **ANTIBLOCKIERREGELSYSTEME MIT ZEITBEGRENZUNG DES ERSTEN BREMSDRUCKABBAUS**
ANTISKID CONTROL SYSTEM WITH DURATION LIMIT OF THE FIRST BRAKE PRESSURE DECREASE
SYSTEME DE REGULATION ANTIPATINAGE AVEC LIMITATION DE LA PREMIERE BAISSE DE PRESSION DE FREINAGE

(30) Priorität: 31.07.1993 DE 4325780
(43) Veröffentlichungstag der Anmeldung: 12.03.1997
(73) Patentinhaber: ROBERT BOSCH GMBH, 70442 Stuttgart (DE)
(72) Erfinder: STEINKE, Leo, D-71334 Waiblingen (DE); CZINCZEL, Armin, D-70825 Korntal-Münchingen (DE); ISELLA, Thomas, D-71706 Markgröningen (DE)
(86) Internationale Anmeldenummer: DE9400870
(87) Internationale Veröffentlichungsnummer: WO9503955

(56) Entgegenhaltungen:
- EP-A- 0 084 664
- DE-A- 4 016 488
- GB-A- 2 169 675
- US-A- 4 027 926

## Beschreibung

Bei bekannten Antiblockierregel systemen kann es vorkommen, daß unter bestimmten Bedingungen bei einer nur kurz dauernden Vollbremsung der Bremsweg länger ist als bei einem Fahrzeug ohne ABS.

Die den Oberbegriff des Anspruchs 1 bildende US 4,027,926 zeigt Antiblockiersystem, bei dem nach Unterscheiten einer bestimmten Fahrgeschwindigkeitsschwelle ein Bremsdruckabbau gänzlich unterbunden wird.

Die Aufgabe der Erfindung besteht in der Optimierung des ABS-Regelvorgangs bei geringen Fahrgeschwindigkeiten.

### Vorteile der Erfindung

Die Erfindung geht aus von einem Antiblockierregelsystem für Kraftfahrzeuge, bei dem mittels Radgeschwindigkeitssensoren die Radgeschwindigkeiten gemessen und einer Auswerteschaltung zugeführt werden. Die Auswerteschaltung erzeugt zur Regelung/Steuerung des Radbewegungsverhaltens Bremsdrucksteuersignale wenigstens zum Druckaufbau und zum Druckabbau bestimmter Dauer, die Bremsdrucksteuereinheiten zur Variation des Bremsdruckes zugeführt werden. Unterhalb einer Fahrzeuggeschwindigkeit wird der Druckabbau modifiziert. Der Kern der Erfindung besteht darin, daß dann, wenn die Fahrzeuggeschwindigkeit bei Bremsbeginn oder bei ABS-Regelbeginn oder bei Auslösung einer ABS-Regelung unterhalb der Fahrzeuggeschwindigkeit liegt, die Dauer des Bremsdruckabbaus auf einen wählbaren Wert größer Null zeitlich begrenzt wird.

Der Vorteil der Erfindung besteht darin, daß bei Vollbremsungen aus relativ geringer Geschwindigkeit der Bremsweg verkürzt wird. Die Erfindung verhindert also, daß es bei Fahrzeugen mit ABS bei Vollbremsungen aus relativ geringer Geschwindigkeit zu Bremswegverlängerungen im Vergleich mit Fahrzeugen ohne ABS kommt.

Insbesondere ist die erfindungsgemäße Beeinflussung des Bremsdruckabbaus an den Vorderrädern vorgesehen, eine derartige Beeinflussung des Bremsdruckabbaus an den Hinterrädern kann aber auch vorgenommen werden.

In einer vorteilhaften Ausgestaltung der Erfindung ist vorgesehen, daß die Dauer wenigstens des ersten Bremsdruckabbaus auf einen Wert begrenzt wird, der abhängig von der ermittelten Griffigkeit der Fahrbahn gewählt wird.

Beim ersten Regelzyklus des ABS ist die Bremskraftausnutzung deutlich schlechter als bei den folgenden Regelzyklen. Dies deshalb, weil der Regler bei einer Vollbremsung bei Regelbeginn mit einem stark instationären Vorgang fertig werden muß und weil die für die Optimierung notwendige Lernmechanismen erst bei den folgenden Regelzyklen nutzbar gemacht werden können. Ist nun der gesamte Vollbremsvorgang relativ kurz, dann geht der (bzw. die) erste(n) Regelzyklus (-zyklen) stark in die Abbremsung ein, wodurch der resultierende Bremsweg länger werden kann als bei einer Abbremsung ohne ABS. Dies gilt typischerweise dann, wenn eine Vollbremsung bei relativ kleiner Anfangsgeschwindigkeit und bei griffiger Fahrbahn erfolgt.

Bei der Erfindung wird in Kauf genommen, daß im ersten Regelzyklus (bzw. in den ersten Regelzyklen) eine Minderung der Lenkbarkeit auftreten kann; die Fahrstabilität bleibt jedoch voll erhalten. Die folgende Abschätzung zeigt, daß bei den gegebenen Umständen eine Bremswegverkürzung wichtiger für eine Unfallvermeidung ist als die optimale Lenkbarkeit.

Bei einer Ausgangsgeschwindigkeit von 40 km/h und einer Verzögerung von 10 m/sec² ergibt sich eine Zeit mit verminderter Lenkfähigkeit von ca. 1 sec; in dieser Zeit kann durch ein Lenkmanöver wenig erreicht werden.

Insbesondere wird erfindungsgemäß vorgesehen, daß die Dauer wenigstens des innerhalb des ersten Regelzyklus stattfindenden ersten Bremsdruckabbaus bei höheren Fahrzeuggeschwindigkeiten bei Bremsbeginn oder bei ABS-Regelbeginn oder bei Auslosung einer ABS-Regelung auf größere Werte begrenzt wird als bei niedrigeren Fahrzeuggeschwindigkeiten bei Bremsbeginn oder bei ABS-Regelbeginn oder bei Auslosung einer ABS-Regelung.

In einer einfachen Ausgestaltung der Erfindung weist die Begrenzung einen festen Wert auf, wenn die Fahrzeuggeschwindigkeit bei Bremsbeginn oder bei ABS-Regelbeginn oder bei Auslosung einer ABS-Regelung kleiner kleiner als ein wählbarer erster Schwellwert ist. Ist die Fahrzeuggeschwindigkeit bei Bremsbeginn oder bei ABS-Regelbeginn oder bei Auslosung einer ABS-Regelung größer größer als der wählbare erste Schwellwert, so kann die Dauer des Bremsdruckabbaus unabhängig von der Fahrzeuggeschwindigkeit bei Bremsbeginn gewählt werden, das heißt, daß die Dauer des Bremsdruckabbaus gemäß dem bekannten ABS-Regelalgorithmus, also ohne die erfindungsgemäße Verminderung, stattfindet.

Wird die Begrenzung wie schon erwähnt zusätzlich abhängig von der ermittelten Griffigkeit der Fahrbahn gewählt, so geschieht die Ermittlung der Griffigkeit der Fahrbahn vorteilhafterweise durch eine Auswertung der Fahrzeuggeschwindigkeit. Hierbei kann die Griffigkeit der Fahrbahn aus der zeitlichen Änderung der Fahrzeuggeschwindigkeit abgeleitet wird.

Bei der erfindungsgemäßen Berücksichtigung der Fahrbahnbeschaffenheit kann in einer einfachen Ausgestaltung der Erfindung vorgesehen sein, daß die Begrenzung des Bremsdruckabbaus einen festen Wert aufweist, wenn die Fahrzeuggeschwindigkeit bei Bremsbeginn oder bei ABS-Regelbeginn oder bei Auslosung einer ABS-Regelung kleiner als ein wählbarer erster Schwellwert ist und zusätzlich die ermittelte Griffigkeit der Fahrbahn größer als ein wählbarer zweiter Schwellwert ist. Auch hierbei ist die Dauer des Bremsdruckabbaus unabhängig von der Fahrzeuggeschwindigkeit bei Bremsbeginn oder bei ABS-Regelbeginn oder bei Auslosung einer ABS-Regelung, wenn die Fahrzeuggeschwindigkeit bei Bremsbeginn oder bei ABS-Regelbeginn oder bei Auslosung einer ABS-Regelung größer ist als der wählbarer erster Schwellwert oder wenn die ermittelte Griffigkeit der Fahrbahn kleiner ist als der wählbarer zweiter Schwellwert, das heißt, daß die Dauer des Bremsdruckabbaus gemäß dem bekannten ABS-Regelalgorithmus, also ohne die erfindungsgemäße Verminderung, stattfindet.

Als Maß für die Griffigkeit kann der Kraftschlußbeiwert aus der Steigung der Fahrzeuggeschwindigkeit (V_{ref}) abgeleitet werden.

Vorteilhafterweise liegt der erwähnte erste Schwellwert für die Fahrzeuggeschwindigkeit bei Bremsbeginn im Bereich von 0 bis 60 km/h und der zweite Schwellwert für den die Griffigkeit der Fahrbahn repräsentierenden Kraftschlußbeiwert im Bereich von 0,5.

Weitere vorteilhafte Ausgestaltungen sind den Unteransprüchen zu entnehmen.

### Zeichnung

Die Zeichnung zeigt drei Figuren mit jeweils einer Ausführungsform der Erfindung.

### Ausführungsbeispiel

Im folgenden soll die Erfindung anhand dreier Ausführungsbeispiele beschrieben werden.

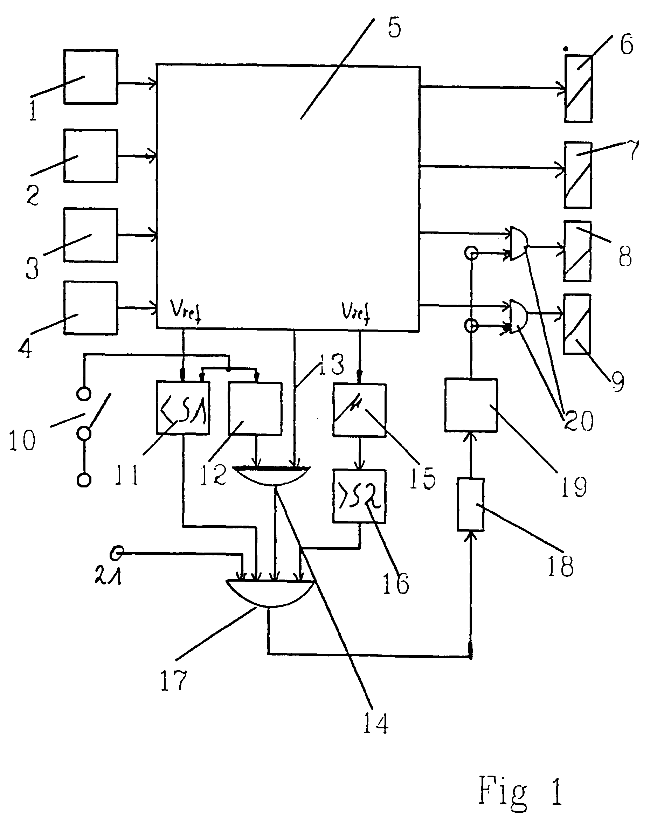

In einem ersten Ausführungsbeispiel sind in der Fig.1 mit 1 bis 4 Sensoren für die Radgeschwindigkeiten bezeichnet. Sie liefern Signale an eine Auswerteschaltung 5 die daraus Bremsdrucksteuersignale entsprechend dem Radbewegungsverhalten bildet, und damit Bremsdrucksteuereinheiten 6, 7, 8 und 9 ansteuert. Der Einfachheit halber sind hier nur die Bremsdrucksteuereinheiten für die Vorderräder in Form von Einlaßventilen 6 und 7 und Auslaßventilen 8 und 9 dargestellt. Es sei aber hier ausdrücklich darauf verwiesen, daß sich die Erfindung auch auf den Bremsdruckabbau der Hinterräder bezieht. In der Auswerteschaltung 5 wird aus den Radgeschwindigkeitssignalen eine der Fahrzeuggeschwindigkeit angenäherte Referenzgeschwindigkeit V_{ref} gebildet.

Der Schalter 10 wird bei ABS-Regelbeginn bzw. bei Auslösung einer ABS-Regelung betätigt. Im einfachsten Fall kann der Schalter auch als Bremslichtschalter ausgebildet sein. Mit Betätigung des Schalters 10 wird ein Vergleicher 11 aktiviert, der feststellt, ob im Augenblick die Referenzgeschwindigkeit bzw. die Fahrzeuggeschwindigkeit kleiner als ein erster Schwellwert S1 (z.B. 40 km/h) ist und dann ein Signal abgibt. Gleichzeitig setzt das Signal des Bremslichtschalters 10 ein monostabiles Glied 12 in seine zweite Stellung, in der es für eine Zeit von z.B. 0,3 sec ein Signal abgibt. Das Ansprechen des ersten Auslaßventils 8 oder 9 erzeugt auf einer Leitung 13 ein Signal. Kommt dieses vor Ablauf der 0,3 sec so wird ein Und-Gatter 14 durchlässig.

Optional, im Falle der zusätzlichen Berücksichtigung der Fahrbahnbeschaffenheit, wird einem weiteren Block 15 die Referenzgeschwindigkeit V_{ref} zugeführt, woraufhin in diesem Block die Steigung dieser Referenzgeschwindigkeit ermittelt wird, die ein Maß der Fahrbahngriffigkeit µ ist. Die Fahrbahngriffigkeit µ wird dann einem Vergleicher 16 zugeführt, der die Fahrbahngriffigkeit mit einem zweiten Schwellwert S2 vergleicht. Ergibt sich als Ergebnis des Vergleichers 16 eine Fahrzeugverzögerung, die auf ein hohes µ [z.B. µ > (S2=0,6)] (bzw. auf einen hohen Kraftschluß k, beispielsweise k > 0,6) schließen läßt, so wird auch aus diesem Zweig ein Signal zu einem Und-Gatter 17 gegeben.

Das Und-Gatter 17 wird dann durchlässig, wenn alle Eingänge ein Signal führen. Damit wird angezeigt, daß Verhältnisse herrschen, die eine Verkürzung der Druckabsenkung, also eine Verminderung des Druckabbaus, auf eine wählbare Dauer angezeigt erscheinen lassen. Dieses Signal wird einem Zeitglied 18 zugeführt, das nach einer Verzögerungszeit von z.B. 12 ms ein Signal abgibt, das ein monostabiles Glied 19 mit einer Zeitkonstanten von z.B. 6 ms setzt. Damit wird 12 ms nach dem Ansprechen des Auslaßventils und für eine Zeit von 6 ms ein Signal an Und-Gatter 20 geliefert, die ein Ansprechen der Auslaßventile 8 und 9 für diese Zeit verhindern.

Somit ist der Druckabbau, durch dessen Anfang auf der Leitung 13 der obenbeschriebene Vorgang gestartet wird, nach 12 ms unterbrochen, was einen verminderten Druckabbau bewirkt. Ein nur im ersten Regelzyklus, also nur beim ersten Druckabbau, auftretendes Signal an einer Klemme 21 bewirkt, daß der auf die Dauer von 12 ms verkürzte Druckabbau nur im ersten Regelzyklus, also nur beim ersten Druckabbau, zustandekommt.

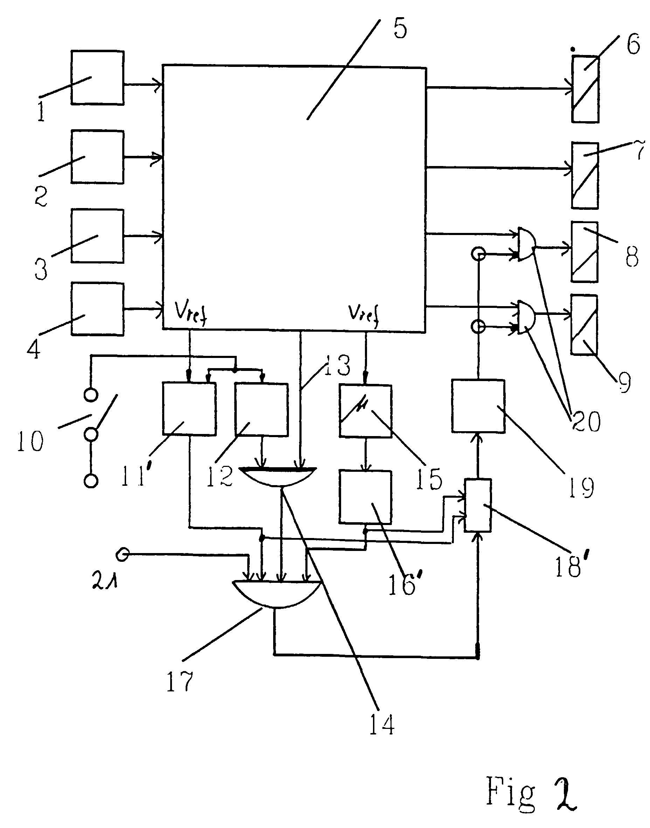

Während das erste Ausführungsbeispiel eine einfache Ausgestaltung der Erfindung zeigt, soll anhand der Fig.2 eine erweiterte zweite Ausführungsform beschrieben werden.

In der Figur 2 sind im wesentlichen die gleichen Blöcke mit den gleichen Funktionen wie in der Fig.1 zu sehen. Auf eine Wiederholung der Beschreibung soll daher verzichtet werden. Unterschiede zum ersten Ausführungsbeispiel bestehen in den veränderten Blöcken 11', 16' (optional) und 18'.

In dem veränderten Block 11' und optional in dem veränderten Block 16' wird die Größe der Fahrzeuggeschwindigkeit V_{ref} bzw. die Größe der Fahrbahnbeschaffenheit µ bei Beginn des Bremsvorgangs ermittelt. Ausgangsseitig dieser Blöcke liegt dann jeweils ein die Größe dieser Signale repräsentierendes Signal, das dem Und-Gatter 17 in schon beschriebener Weise und Zeitglied 18' zugeführt wird. Ausgangsseitig des Zeitgliedes 18' liegt nun nach Ablauf einer Verzögerungszeit ein Signal an dem monostabilen Glied 19 an. Wesentlich bei diesem Ausführungsbeispiel ist es nun, daß mittels des Zeitgliedes 18' die Verzögerungszeit abhängig von der Größe der Fahrzeuggeschwindigkeit V_{ref} bzw. von der Größe der Fahrbahnbeschaffenheit µ bei Beginn des Bremsvorgangs gewählt wird.

Hierdurch wird erreicht, daß die Dauer des ersten Bremsdruckabbaus beispielsweise bei höheren Fahrzeuggeschwindigkeiten V_{ref} bei Bremsbeginn länger gewählt werden kann als bei niedrigeren Fahrzeuggeschwindigkeiten V_{ref} bei Bremsbeginn. Somit ist eine feinere Applikation in Bezug den Zielkonflikt zwischen kurzen Bremsweg und Lenkbarkeit möglich, indem mit steigender Fahrzeuggeschwindigkeit der Lenkbarkeit des Fahrzeugs eine höhere Priorität eingeräumt werden kann.

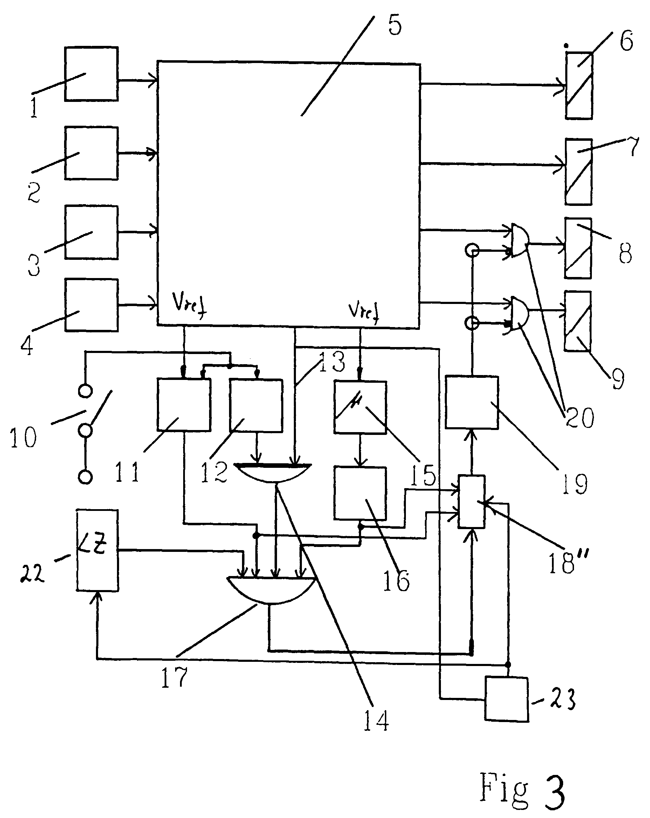

In der Figur 3 sind im wesentlichen die gleichen Blöcke mit den gleichen Funktionen wie in der Fig.2 zu sehen. Auf eine Wiederholung der Beschreibung soll daher auch hier verzichtet werden. Unterschiede zum ersten Ausführungsbeispiel bestehen in den neuen Blöcken 22 und 23 und dem veränderten Block 18''.

Wie im ersten Ausführungsbeispiel erzeugt das Ansprechen des ersten Auslaßventils 8 oder 9 auf einer Leitung 13 ein Signal. Dieses Signal wird nun zusätzlich einem Zähler 23 zugeleitet. Der Zähler 23 zählt die Ansprechimpulse der ersten Auslaßventile 8 und 9 und gibt entsprechende Signale an den Vergleicher 22 und optional an das Zeitglied 18' ab. In dem Vergleicher 22 wird das Zählsignal mit einer Schwelle Z verglichen. Bis zur Erreichung der Schwelle Z liegt ausgangsseitig des Vergleichers 22 ein Signale am Und-Gatter 17 an bis zum Erreichen der Schwelle Z. Hiermit wird folgendes erreicht:

Während im beschriebenen ersten und zweiten Ausführungsbeispiel nur die Dauer des ersten Bremsdruckabbaus erfindungsgemäß zeitlich begrenzt wird (Klemme 21), kann im dritten Ausführungsbeispiel die erfindungsgemäße Beeinflussung der Dauer des Bremsdruckabbaus auch für die weiteren Bremsdruckabbauperioden stattfinden. So kann beispielsweise durch das Setzen des Schwellwertes Z=3 eine Beeinflussung der Dauer für die ersten zwei Bremsdruckabbauperioden erreicht werden.

Zusätzlich zu der gegenüber dem ersten und zweiten Ausführungsbeispiel beschriebenen Erweiterung der Erfindung über den ersten Bremsdruckabbau hinaus ist optional weiterhin vorgesehen, daß die Ausgangssignale des Zählers 23 dem Zeitglied 18'' zugeführt werden, mittels dem abhängig vom Zählerstand (Ausgangssignal des Zählers 23) nach unterschiedlichen Verzögerungszeiten Signale an das monostabile Glied 19 abgegeben werden. Hiermit kann erreicht werden, daß die Dauer der Bremsdruckabbauperioden mit steigender Anzahl länger werden.

## Patentansprüche

1. Antiblockierregelsystem für Kraftfahrzeuge, bei dem mittels Radgeschwindigkeitssensoren (1, 2, 3, 4) die Radgeschwindigkeiten gemessen und einer Auswerteschaltung (5) zugeführt werden, wobei die Auswerteschaltung (5) zur Regelung/Steuerung des Radbewegungsverhaltens Bremsdrucksteuersignale wenigstens zum Druckaufbau und zum Druckabbau bestimmter flauer erzeugt, die Bremsdrucksteuereinheiten (6, 7, 8, 9) zur Variation des Bremsdruckes zugeführt werden, und unterhalb einer bestimmten Fahrzeuggeschwindigkeit (S1) der Druckabbau modifiziert wird, dadurch gekennzeichnet, daß, wenn die Fahrzeuggeschwindigkeit (Vref) bei Bremsbeginn oder bei ABS-Regelbeginn oder bei Auslösung einer ABS-Regelung unterhalb eines ersten Schwellwertes (S1) liegt, die Dauer wenigstens des ersten Bremsdruckabbaus mittels eines Zeitgliedes auf einen wählbaren Wert zeitlich begrenzt wird.

2. Antiblockierregelsystem nach Anspruch 1, dadurch gekennzeichnet, daß die Dauer wenigstens des ersten Bremsdruckabbaus auf einen Wert begrenzt wird, der abhängig von der Fahrzeuggeschwindigkeit (Vref) bei Bremsbeginn oder bei ABS-Regelbeginn oder bei Auslösung einer ABS-Regelung gewählt wird.

3. Antiblockierregelsystem nach Anspruch 2, dadurch gekennzeichnet, daß die Dauer wenigstens des ersten Bremsdruckabbaus bei größeren Fahrzeuggeschwindigkeiten (Vref) bei Bremsbeginn oder bei ABS-Regelbeginn oder bei Auslösung einer ABS-Regelung auf größere Werte begrenzt wird als bei niedrigeren Fahrzeuggeschwindigkeiten (Vref) bei Bremsbeginn oder bei ABS-Regelbeginn oder bei Auslösung einer ABS-Regelung.

4. Antiblockierregelsystem nach Anspruch 1, dadurch gekennzeichnet, daß die Dauer wenigstens des ersten Bremsdruckabbaus auf einen festen Wert begrenzt wird.

5. Antiblockierregelsystem nach Anspruch 1, dadurch gekennzeichnet, daß die Dauer wenigstens des ersten Bremsdruckabbaus auf einen Wert begrenzt wird, der zusätzlich abhängig von der ermittelten Griffigkeit (µ) der Fahrbahn gewählt wird.

6. Antiblockierregelsystem nach Anspruch 5, dadurch gekennzeichnet, daß die Ermittlung der Griffigkeit der Fahrbahn durch Auswertung der Fahrzeuggeschwindigkeit (V_{ref}) geschieht.

7. Antiblockierregelsystem nach Anspruch 6, dadurch gekennzeichnet, daß die Griffigkeit der Fahrbahn aus der zeitlichen Änderung der Fahrzeuggeschwindigkeit (V_{ref}) abgeleitet wird.

8. Antiblockierregelsystem nach Anspruch 1, dadurch gekennzeichnet, daß die Begrenzung nur dann wirksam wird, wenn zusätzlich die ermittelte Griffigkeit der Fahrbahn größer als ein wählbarer zweiter Schwellwert (S2) ist.

9. Antiblockierregelsystem nach Anspruch 1 oder 8, dadurch gekennzeichnet, daß der erste Schwellwert (S1) für die Fahrzeuggeschwindigkeit (Vref) bei Bremsbeginn oder bei ABS-Regelbeginn oder bei Auslösung einer ABS-Regelung im Bereich von 0 bis 60 km/h liegt und/oder der zweite Schwellwert für den die Griffigkeit der Fahrbahn repräsentierenden Kraftschlußbeiwert im Bereich von 0,5 liegt.

## Claims

1. Antilock brake control system for motor vehicles, in which the wheel speeds are measured by means of wheel-speed sensors (1, 2, 3, 4) and are fed to an evaluation circuit (5), wherein, for the purpose of closed-loop/open-loop control of the wheel-movement behaviour, the evaluation circuit (5) generates brake-pressure control signals at least for the pressure increase and pressure decrease of a certain duration, which are fed to brake-pressure control units (6, 7, 8, 9) for the purpose of varying the brake pressure, and below a certain vehicle speed (S1) the pressure decrease is modified, characterized in that, if the vehicle speed (V_{ref}) lies below a first threshold value at the beginning of braking or the beginning of ABS control or when ABS control is initiated, the duration at least of the first brake pressure decrease is limited in time to a selectable value by means of a timing element.

2. Antilock brake control system according to Claim 1, characterized in that the duration at least of the first brake pressure decrease is limited to a value which is selected dependent on the vehicle speed (V_{ref}) at the beginning of braking or at the beginning of ABS control or when ABS control is initiated.

3. Antilock brake control system according to Claim 2, characterized in that the duration at least of the first brake pressure decrease at relatively great vehicle speeds (V_{ref}) at the beginning of braking or the beginning of ABS control or when ABS control is initiated is limited to greater values than at lower vehicle speeds (V_{ref}) at the beginning of braking or the beginning of ABS control or when ABS control is initiated.

4. Antilock brake control system according to Claim 1, characterized in that the duration at least of the first brake pressure decrease is limited to a fixed value.

5. Antilock brake control system according to Claim 1, characterized in that the duration at least of the first brake pressure decrease is limited to a value which is selected additionally dependent on the determined skid-resisting property (µ) of the carriageway.

6. Antilock brake control system according to Claim 5, characterized in that the determination of the skid-resisting property of the carriageway takes place by evaluating the vehicle speed (V_{ref}).

7. Antilock brake control system according to Claim 6, characterized in that the skid-resisting property of the carriageway is derived from the change over time of the vehicle speed (V_{ref}).

8. Antilock brake control system according to Claim 1, characterized in that the limitation is effective only if the determined skid-resisting property of the carriageway is additionally greater than a selectable second threshold value (S2).

9. Antilock brake control system according to Claim 1 or 8, characterized in that the first threshold value (S1) for the vehicle speed (V_{ref}) at the beginning of braking or at the beginning of ABS control or when ABS control is initiated lies in the range from 0 to 60 km/hour and/or the second threshold value for the adhesion coefficient representing the skid-resisting property of the carriageway lies in the region of 0.5.

## Revendications

1. Système de régulation antiblocage pour des véhicules automobiles, selon lequel des capteurs de vitesse de roue (1, 2, 3, 4) mesurent la vitesse des roues et alimentent un circuit d'exploitation (5),
le circuit d'exploitation (5) générant, pour réguler/commander le comportement du mouvement des roues, des signaux de commande de pression de frein au moins pour augmenter la pression et pour abaisser la pression, selon une certaine durée, ces signaux étant fournis à des unités de commande de pression de frein (6, 7, 8, 9) pour modifier la pression de frein, et, en dessous d'une vitesse déterminée du véhicule (S1), on modifie l'abaissement de la pression,
caractérisé en ce que
si, au début du freinage ou au début d'une régulation ABS ou au déclenchement d'une régulation ABS, la vitesse du véhicule (V_{ref}) est en dessous d'un premier seuil (S1), on limite dans le temps la durée d'au moins le premier abaissement de pression de frein, à l'aide d'un élément de temporisation, à une valeur sélectionnée.

2. Système de régulation antiblocage selon la revendication 1,
caractérisé en ce qu'
on limite la durée d'au moins le premier abaissement de pression de frein à une valeur choisie en fonction de la vitesse du véhicule (V_{ref}), au début du freinage ou au début d'une régulation ABS, ou au déclenchement d'une régulation ABS.

3. Système de régulation antiblocage selon la revendication 2,
caractérisé en ce qu'
on limite la durée d'au moins le premier abaissement de pression de frein aux vitesses élevées du véhicule (V_{ref}), au début du freinage ou au début d'une régulation ABS ou au déclenchement d'une régulation ABS, à des valeurs plus grandes qu'à des vitesses faibles du véhicule (V_{ref}) au début du freinage ou au début d'une régulation ABS ou au déclenchement d'une régulation ABS.

4. Système de régulation antiblocage selon la revendication 1,
caractérisé en ce que
la durée au moins du premier abaissement de pression de frein est limitée à une valeur fixe.

5. Système de régulation antiblocage selon la revendication 1,
caractérisé en ce que
la durée au moins du premier abaissement de pression de frein est limitée à une valeur choisie en plus en fonction de l'accrochage (µ), déterminé, de la chaussée.

6. Système de régulation antiblocage selon la revendication 5,
caractérisé en ce qu'
on détermine l'accrochage de la chaussée en exploitant la vitesse du véhicule (V_{ref}).

7. Système de régulation antiblocage selon la revendication 6,
caractérisé en ce qu'
on déduit l'accrochage de la chaussée à partir de la variation de la vitesse (V_{ref}) du véhicule en fonction du temps.

8. Système de régulation antiblocage selon la revendication 1,
caractérisé en ce que
la limitation ne devient active que si, en plus, l'accrochage obtenu de la chaussée est supérieur à un second seuil choisi (S2).

9. Système de régulation antiblocage selon la revendication 1 ou 8,
caractérisé en ce que
le premier seuil (S1) de la vitesse du véhicule (V_{ref}), au début du freinage ou au début de la régulation ABS ou au déclenchement d'une régulation ABS, est compris dans une plage entre 0 et 60 km/h, et/ou le second seuil de l'adhérence représentant l'accrochage de la chaussée se situe dans une plage à partir de 0,5.
